# FASCICULE DE BREVET EUROPEEN

(11) **EP 3 256 698 B1**
(45) Date de publication et mention de la délivrance du brevet: **03.04.2019**
(21) Numéro de dépôt: 16707882.3
(22) Date de dépôt: 09.02.2016
(51) Int. Cl.: F01D 11/02, F01D 25/00, F01D 25/16, F02C 7/00, F16B 33/00

(54) **ECROU POUR LE BLOCAGE AXIAL D'UNE BAGUE DE PALIER DANS UNE TURBOMACHINE**
MUTTER ZUR AXIALEN ARRETIERUNG EINES LAGERRINGS IN EINER TURBOMASCHINE
RETAINER NUT FOR AXIAL BLOCKAGE OF A BEARING IN A TURBOMACHINE

(30) Priorité: 10.02.2015 FR 1551086
(43) Date de publication de la demande: 20.12.2017
(73) Titulaire: Safran Aircraft Engines, 75015 Paris (FR)
(72) Inventeur: ACCARY, Arnaud, Michel, Marie, 77550 Moissy-Cramayel Cedex (FR); HASQUENOPH, Alexandre, Michel, Henri, 77550 Moissy-Cramayel Cedex (FR); ROGUES, Frédéric, David, Stéphane, 77550 Moissy-Cramayel Cedex (FR); SERVANT, Régis, Eugène, Henri, 77550 Moissy-Cramayel Cedex (FR)
(74) Mandataire: Gevers & Orès
(86) Numéro de dépôt international: PCT/FR2016/050273
(87) Numéro de publication internationale: WO 2016/128663

(56) Documents cités:
- US-A- 3 915 523

## Description

### DOMAINE TECHNIQUE

La présente invention concerne un écrou de turbomachine, en particulier pour le blocage axial d'une bague de palier.

### ETAT DE L'ART

L'état de l'art comprend notamment les documents US-A-3,915,523, US-A-6,142,729, US-A1-2006/251512, US-A1-2003/044097 et US-A1-2009/034896.

Une turbomachine comprend des paliers de guidage et de centrage de pièces telles que des arbres. Les paliers du type à roulements comprennent deux bagues, respectivement interne et externe, entre lesquelles sont situées les roulements, tels que des billes ou des rouleaux, qui peuvent être maintenus à distance les uns des autres par une cage annulaire interposée entre les bagues.

Comme cela est visible en figure 1, qui est extraite de la demande antérieure FR-A1-2 976 623 de la Déposante, chaque palier 10 est en général monté sur un arbre de turbomachine (ou un élément porté par l'arbre) par coulissement axial sur une surface cylindrique 12 de l'arbre, jusqu'à ce que sa bague interne 14 vienne en appui axial contre un épaulement annulaire 16 de l'arbre. La bague interne 14 est ensuite bloquée axialement contre l'épaulement 16 au moyen d'un écrou 18 qui est vissé sur l'arbre et dont une extrémité prend appui axialement sur la bague interne 14. La bague externe 15 de chaque palier 10 est en général fixée à un support de palier 17, 19, ce support servant ici de cage interposée entre les bagues.

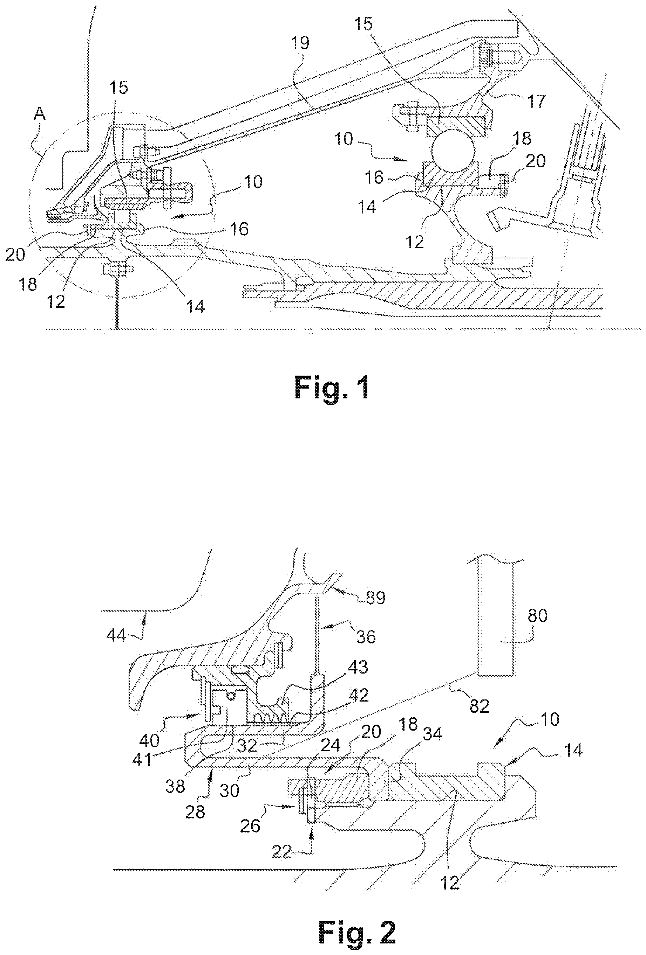

Il est connu d'associer à un écrou des moyens de blocage 20 pour assurer son immobilisation en rotation vis-à-vis de l'arbre sur lequel il est monté, comme cela est également visible en figure 1.

Dans le cadre de la présente invention, on s'intéresse plus particulièrement à l'environnement désigné par la référence A en figure 1 et qui est représenté à plus grande échelle en figure 2 (bien que les technologies illustrées aux figures 1 et 2 soient différentes).

Cette figure 2 montre que les moyens de blocage 20 précités de l'écrou 18 sont situés à son extrémité située du côté opposé au palier 10. Ces moyens de blocage 20 comprennent un rebord cylindrique axial qui comprend une rangée annulaire d'encoches radiales définissant entre elles des dents axiales. Ces moyens de blocage 20 sont alignés radialement avec des moyens de blocage 22 similaires de l'arbre. Un anneau de verrouillage 24 est rapporté sur les moyens de blocage 20, 22 et comprend des pattes radiales qui sont engagées entre les dents de ces moyens de blocage pour assurer l'immobilisation en rotation de l'écrou vis-à-vis de l'arbre. L'anneau de verrouillage 24 est rapporté sur les moyens de blocage 20, 22 par translation axiale et est retenu axialement en position de verrouillage par l'intermédiaire d'un jonc d'arrêt 26 qui prend appui axialement sur l'anneau 24 et qui est engagé dans une gorge annulaire radialement interne du rebord cylindrique axial des moyens de blocage 20 de l'écrou.

Dans la technique antérieure à l'invention illustrée par la figure 2, on constate que l'écrou 18 est en appui axial sur la bague interne 14 du palier 10 par l'intermédiaire d'un organe d'étanchéité 28, appelé couramment « labyrinthe tournant » dans le domaine aéronautique. Cet organe d'étanchéité 28 comprend une partie à section axiale en U ou en C dont l'ouverture débouche axialement, ici vers l'aval (par référence à l'écoulement des gaz dans une turbomachine) et qui comporte deux parois annulaires sensiblement cylindriques, respectivement interne 30 et externe 32, s'étendant l'une à l'intérieur de l'autre. La paroi interne 30 comprend à son extrémité aval un rebord annulaire 34 qui s'étend radialement vers l'intérieur et qui est serré axialement entre l'écrou 18 et la bague interne 14 du palier 10. La paroi externe 32 est reliée par son extrémité aval à une paroi annulaire radiale 36 s'étendant vers l'extérieur et formant un déflecteur ou lance-goutte. La paroi externe 32 ainsi que la paroi radiale 36 sont entourées par une partie d'un capotage d'enceinte 89, un système 40 d'étanchéité dynamique étant monté entre la paroi externe 32 et le capotage d'enceinte 89. Dans la présente demande, on entend par étanchéité dynamique, une étanchéité réalisée entre deux pièces mobiles l'une par rapport à l'autre, en particulier en rotation. La paroi externe 32 de l'organe comprend un moyen d'étanchéité 38 constitué par une surface cylindrique pourvu d'un revêtement destiné à durcir la surface et améliorer le coefficient de frottement qui collabore avec les éléments 41 faisant partie du système d'étanchéité 40. Ce système d'étanchéité 40 est complété par une vrille 43 qui collabore avec des rainures axiales 42 portées par la paroi externe 32 afin de protéger le système d'étanchéité 40 d'une pollution par l'huile qui pourrait l'atteindre, plus particulièrement celle servant à lubrifier le palier 10. Le frottement des éléments 41 sur le moyen d'étanchéité 38 génère de la chaleur requérant un refroidissement de la paroi externe 32. Ce refroidissement est réalisé par un jet d'huile 82 provenant d'un gicleur d'huile 80 dirigé à l'intérieur de la section axiale en U ou en C de l'organe d'étanchéité 28.

Par ailleurs, comme cela est illustré en figure 2, une partie du capotage d'enceinte 89 est entourée par une partie du rotor de soufflante de la turbomachine, et en particulier par un disque de soufflante 44.

On a constaté qu'en cas, heureusement peu fréquent, de dégradation ou de rupture d'une aube de soufflante, il existe un risque de contact à effort conséquent entre le capotage d'enceinte 89 et le disque de soufflante 44. Une solution à ce problème consisterait à augmenter les jeux entre ces pièces. Cependant, le disque de soufflante 44 ne pouvant pas être facilement modifié (notamment à cause de problème de dimensionnement) et le palier 10 ne pouvant pas être facilement déplacé (notamment à cause du défaut de souplesse de l'architecture moteur), une autre solution doit être envisagée.

La présente invention propose une solution simple, efficace et économique à ce problème.

### EXPOSE DE L'INVENTION

L'invention propose à cet effet un écrou de turbomachine, en particulier pour le blocage axial d'une bague de palier, l'écrou comportant un filetage de vissage sur une pièce de la turbomachine, et des moyens de blocage pour l'immobilisation en rotation de l'écrou vis-à-vis de ladite pièce, l'écrou comprenant en outre au moins un moyen d'étanchéité dynamique, caractérisé en ce qu'il comprend une partie à section axiale en forme sensiblement de C ou de U dont l'ouverture est orientée axialement, cette partie comportant deux parois sensiblement cylindriques, respectivement interne et externe, ledit filetage étant situé sur la paroi cylindrique interne et ledit moyen d'étanchéité dynamique étant situé sur la paroi cylindrique externe.

L'invention propose ainsi d'intégrer à l'écrou les fonctions de l'organe d'étanchéité de la technique antérieure. Autrement dit, l'invention propose de combiner l'ensemble formé par l'écrou et l'organe d'étanchéité de la technique antérieure en un seul et même élément. Cette combinaison permet notamment de réduire l'encombrement, en particulier radial, de cet ensemble en réduisant son diamètre. Cette réduction de l'encombrement permet d'envisager une augmentation du jeu axial entre le support palier et le disque de soufflante, dans le cas particulier décrit ci-dessus, et donc de limiter le risque de contact entre ces pièces en cas de rupture d'une aube de soufflante.

L'écrou selon l'invention comprend de préférence deux moyens d'étanchéité dynamique indépendants.

Le ou chaque moyen d'étanchéité comprend par exemple une série de léchettes annulaires, une surface d'étanchéité, une vrille, des lunules ou rainures destinées à améliorer l'efficacité de la vrille, et/ou un élément d'un joint d'étanchéité à labyrinthe.

L'écrou peut comprendre une paroi radiale externe formant par exemple un déflecteur, qui est de préférence configuré pour protéger les moyens d'étanchéité dynamique.

Selon un mode préféré de réalisation de l'invention l'écrou comprend une partie à section axiale en forme sensiblement de C ou de U dont l'ouverture est orientée axialement, ce qui peut permettre le refroidissement par jet d'huile des moyens d'étanchéité. Cette partie peut comporter deux parois sensiblement cylindriques, respectivement interne et externe, ledit filetage étant situé sur la paroi cylindrique interne et au moins l'un des moyens d'étanchéité dynamique étant situé sur la paroi cylindrique externe. La paroi radiale externe de l'écrou peut être située à une extrémité aval de ladite paroi cylindrique externe.

Un autre moyen d'étanchéité dynamique est de préférence situé sur un prolongement axial amont de ladite paroi cylindrique interne.

Avantageusement, l'écrou comprend des moyens de centrage, indépendants audit filetage, et configurés pour coopérer avec ladite pièce.

De préférence, les moyens de blocage comprennent un rebord radial interne qui comprend des encoches axiales configurées pour recevoir des pattes axiales d'un anneau de verrouillage.

Avantageusement, ladite ouverture est configurée pour définir une cavité de refroidissement, en particulier par impact d'huile sur au moins une de ses parois.

La présente invention concerne en outre une turbomachine, comportant une pièce, telle qu'un arbre, portant une bague de palier qui est bloqué axialement par un écrou tel que décrit ci-dessus.

La turbomachine comprend de préférence au moins un gicleur d'huile configuré pour projeter de l'huile dans ladite ouverture de l'écrou.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demi vue schématique en coupe axiale d'une turbomachine selon la technique antérieure,
- la figure 2 est une demi vue schématique en coupe axiale d'un écrou de blocage axial d'une bague de palier et d'un organe d'étanchéité selon la technique antérieure,
- la figure 3 est une demi vue schématique en coupe axiale d'un écrou de blocage axial d'une bague de palier selon l'invention, l'écrou comportant des dents emboîtées dans des encoches d'un arbre,
- la figure 4 est une vue schématique en perspective de l'anneau de verrouillage de la figure 3,
- la figure 5 est une vue schématique en perspective de l'écrou de la figure 3, et
- les figures 6 et 7 sont d'autres vues schématiques de l'écrou de la figure 3.

### DESCRIPTION DETAILLEE

Les figures 1 et 2 ont été décrites dans ce qui précède et illustrent la technique antérieure à l'invention.

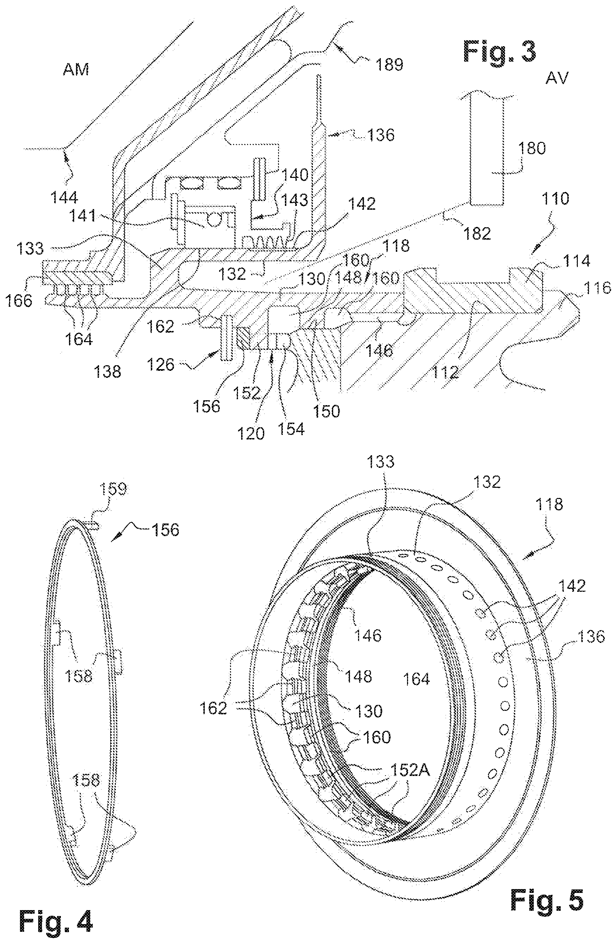

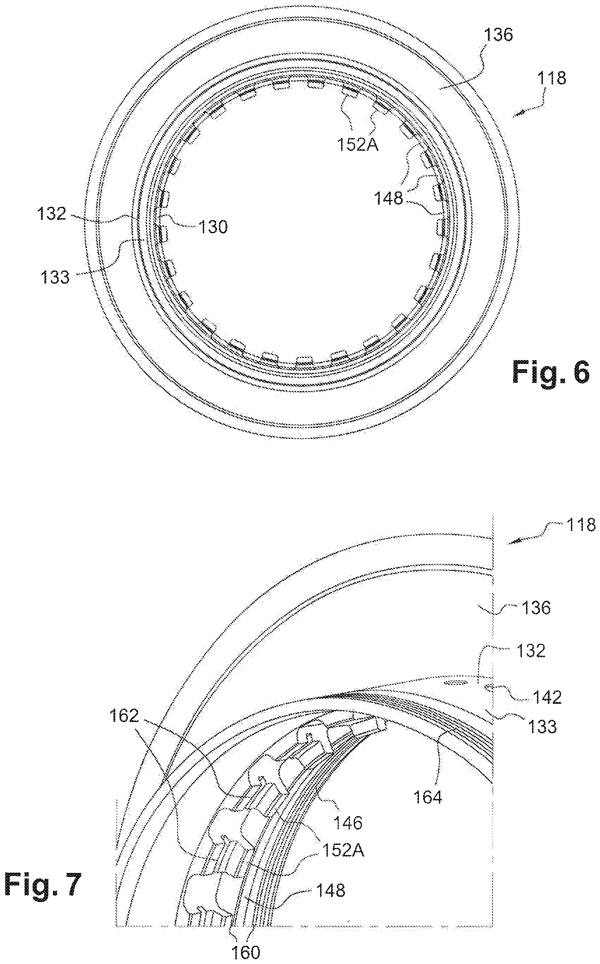

Les figures 3 à 7 représentent un mode de réalisation d'un écrou 118 de blocage d'une bague interne 114 d'un palier 110 de turbomachine. Comme cela est décrit dans ce qui précède en référence aux figures 1 et 2, le palier 110 est monté sur un arbre de turbomachine (ou un élément porté par l'arbre) par coulissement axial sur une surface cylindrique 112 de l'arbre, jusqu'à ce que sa bague interne 114 vienne en appui axial contre un épaulement annulaire 116 de l'arbre. La bague interne 114 est ensuite bloquée axialement contre l'épaulement 116 au moyen de l'écrou 118 qui est vissé sur l'arbre et dont une extrémité prend appui axialement sur la bague interne 114. La bague externe du palier n'est pas représentée et est fixée à un capotage d'enceinte 189.

L'écrou 118 est vissé depuis l'amont (à gauche sur le dessin) sur l'arbre et comprend un filetage interne 146 configuré pour coopérer avec un filetage externe complémentaire de l'arbre, qui est situé directement en amont de la surface 112.

Dans l'exemple représenté, l'écrou 118 comprend une partie à section axiale en forme sensiblement en U ou en C dont l'ouverture est orientée axialement, ici vers l'aval (la droite de la figure 3, indiquée AV). L'écrou 118 comprend ainsi deux parois annulaires sensiblement cylindriques, respectivement interne 130 et externe 132, s'étendant l'une à l'intérieur de l'autre. Les parois 130, 132 sont reliées entre elles à leurs extrémités amont par une paroi sensiblement radiale 133.

La paroi interne 130 comprend à son extrémité aval le filetage 146. Il comprend en outre, en amont (vers la gauche de la figure 3, indiquée par le signe AM) du filetage 146, un rebord annulaire 148 s'étendant radialement vers l'intérieur. Ce rebord 148 est configuré pour coopérer avec l'arbre pour former des moyens de centrage de l'écrou 118. Le rebord 148 comprend ici une surface cylindrique radialement interne destinée à coulisser sur une surface cylindrique 150 de l'arbre. Ces moyens de centrage peuvent être importants pour assurer le bon fonctionnement des moyens d'étanchéité évoqués plus tard.

La paroi interne 130 comprend en outre, en amont du rebord 148, un rebord annulaire 152 s'étendant radialement vers l'intérieur. Ce rebord 152 comprend une rangée annulaire d'encoches axiales qui sont régulièrement réparties et qui définissent entre elles des dents radiales 152A. Le rebord 152 a un diamètre interne inférieur à celui du rebord 148 de sorte qu'une de ces encoches, en position de montage de l'écrou 118, soit alignée axialement avec une des encoches axiales de l'arbre. Les dents axiales 154 de l'arbre sont ici formées par un rebord cylindrique axial de l'arbre qui s'étend vers l'amont et comprend une rangée annulaire d'encoches radiales définissant entre elles des dents 154 de l'arbre. En position de montage représentée en figure 3, les dents radiales 152A du rebord 152 sont situées à faible distance axiale des encoches de l'arbre entre lesquelles sont situées des dents 154. Ces dents forment des moyens de blocage 120 qui coopèrent avec un anneau de verrouillage 156 pour immobiliser en rotation l'écrou 118 vis-à-vis de l'arbre.

L'anneau de verrouillage 156 est mieux visible en figure 4. Il a une forme continue sur 360° et comprend des pattes axiales 158, et au moins une patte axiale 159 plus longue, qui s'étendent vers l'aval. Ces pattes 158 et 159, dont le nombre est choisi de façon appropriée, sont régulièrement réparties autour de l'axe de révolution de l'anneau 156. L'anneau 156 est monté par translation depuis i'amont sur les dents du rebord 152 et les dents 154 de l'arbre, les pattes 158 et 159 de l'anneau étant destinées à s'engager entre ces dents qui peuvent venir en butée en direction circonférentielle sur les extrémités circonférentielles des pattes 158 et 159 pour assurer l'immobilisation précitée. Seule(s) la ou les pattes 159 s'engagent dans la ou les encoches de l'arbre préalablement alignées avec celles de l'écrou 118. Comme cela est visible en figure 3, les rebords 148, 152 sont séparés l'un de l'autre par une première gorge annulaire 160 de la paroi 130, qui débouche radialement vers l'intérieur, et le rebord 148 et le filetage 146 sont séparés l'un de l'autre par une seconde gorge annulaire 160 de la paroi 130, qui débouche radialement vers l'intérieur.

La paroi interne 130 comprend en outre, en amont du rebord 152, une rainure annulaire 162 débouchant radialement vers l'intérieur et dans laquelle est montée la périphérie externe d'un jonc annulaire d'arrêt 126 qui peut prendre appui axialement sur l'anneau 156 pour le retenir axialement dans la position de verrouillage précitée de l'écrou 118. Comme on le voit en figure 5, cette rainure 162 n'est pas continue sur 360° et est interrompue par les encoches axiales précitées du rebord 152, ces encoches s'étendant axialement jusqu'à la zone où est située la rainure 162. Ces encoches peuvent être configurées pour coopérer avec un outil de vissage/dévissage de l'écrou 118, comme cela sera décrit dans ce qui suit.

La paroi interne 130 de l'écrou 118 se prolonge axialement vers l'amont, au-delà de la paroi 133, et définit un rebord cylindrique axial amont qui porte un premier moyen d'étanchéité. Ce premier moyen d'étanchéité est ici une série de léchettes annulaires externes 164 qui coopèrent avec une couche 166 de matériau abradable portée par le capotage d'enceinte 189. L'ensemble comprenant les léchettes 164 et la couche abradable 166 forme un système ou joint d'étanchéité dynamique, ici du type à labyrinthe.

La paroi externe 132 est reliée par son extrémité aval à une paroi radiale 136 s'étendant vers l'extérieur et formant un déflecteur ou lance-goutte. La paroi externe 132 ainsi que la paroi radiale 136 sont entourées par le capotage d'enceinte 189. Le système 140 d'étanchéité dynamique est monté entre la paroi externe 132 et le capotage d'enceinte 189. Ce système 140 comprend des éléments frottants 141 qui collaborent avec une surface ou un moyen d'étanchéité 138 de la paroi externe 132. La surface 138 est recouverte d'un revêtement destiné à la durcir et améliorer le coefficient de frottement avec les éléments frottants 141. Le frottement des éléments frottants 141 sur le moyen d'étanchéité 138 génère de la chaleur requérant un refroidissement de la paroi externe 132. Ce refroidissement est réalisé par un jet d'huile 182 provenant d'un gicleur d'huile 180 dirigé à l'intérieur de la section axiale en U ou en C de l'organe d'étanchéité.

Le déflecteur formé par la paroi 136 est installé pour protéger les joints d'étanchéité dynamique de l'enceinte d'huile située en aval de la paroi 136 et nécessaire à la lubrification du palier 110, et éjectée par celui-ci en fonctionnement. Sans ce déflecteur, les joints d'étanchéité de l'enceinte seraient saturés d'huile, et ne pourraient plus assurer leur fonction de ventilation de l'enceinte.

Quand bien même cette protection ne serait pas suffisante, le système d'étanchéité 140 peut être complété par une vrille 143 qui collabore avec des rainures axiales ou lunules 142 portées par la paroi externe 132 afin de protéger le système d'étanchéité 140 d'une pollution par l'huile d'enceinte. Les lunules ou rainures axiales sont destinées à améliorer l'efficacité de la vrille 143.

Par ailleurs, comme cela est illustré en figure 3, une partie du capotage d'enceinte 189 est entourée par une partie du rotor de soufflante de la turbomachine, et en particulier par un disque de soufflante 144.

L'invention propose ainsi d'intégrer l'organe d'étanchéité de la technique antérieure dans l'écrou 118, qui comprend donc plusieurs fonctions : de vissage sur l'arbre et d'arrêt axial de la bague interne 114 de palier, de centrage sur l'arbre au moyen du rebord 148, de blocage en rotation vis-à-vis de l'arbre au moyen des dents du rebord 152 et de l'anneau 156, d'étanchéité ici dynamique avec les léchettes 164, du moyen d'étanchéité 138 , et enfin de protection des joints d'étanchéité dynamique avec les rainures axiales ou lunules 142 et le déflecteur formé par la paroi radiale 136.

Par rapport à la technique antérieure représentée en figure 2, l'écrou 118 a un diamètre plus faible. Ceci est notamment rendu possible par la suppression du rebord 34 de la technique antérieure et par la liaison de la paroi interne 30 de l'organe à l'extrémité amont de l'écrou 18.

L'écrou 118 selon l'invention peut être monté de la façon suivante. Le palier 110 est monté sur l'arbre par coulissement axial de sa bague interne, depuis l'amont, sur la surface cylindrique 112 de l'arbre. L'écrou 118 est aligné axialement vis-à-vis de l'arbre et disposé en amont du palier 110. Il est déplacé en translation vers l'aval le long de l'axe de l'arbre jusqu'à ce que son filetage 146 soit situé à l'entrée/en amont du filetage de l'arbre. Un outil approprié est alors utilisé pour mettre en rotation l'écrou et le visser sur l'arbre. Cet outil peut être mis en prise sur l'écrou 118 au niveau du rebord 152, l'outil pouvant comprendre des dents axiales engagées dans les encoches axiales précitées de ce rebord 152. Le vissage est poursuivi jusqu'à ce que l'écrou 118 vienne en appui axial sur la bague interne 114 qui est alors serrée entre l'écrou 118 et l'épaulement 116 de l'arbre. Un surcouple est appliqué à l'écrou 118 afin d'aligner au moins une de ses encoches avec au moins une encoche de l'arbre. L'anneau de verrouillage 156 est aligné axialement vis-à-vis de l'arbre et disposé en amont de l'écrou 118. Il est déplacé en translation vers l'aval le long de l'axe de l'arbre jusqu'à ce que ses pattes 158 s'engagent entre les dents du rebord 152 et que la ou les pattes plus longues 159 s'engagent entre les rebords 152 et les dents 154 de l'arbre préalablement alignés. Le jonc annulaire 126 est ensuite monté dans la rainure pour retenir axialement l'anneau 154 dans sa position de verrouillage de l'écrou 118. Pour cela, le jonc 126 peut être contraint élastiquement pour diminuer son diamètre externe jusqu'à ce qu'il puisse être engagé à l'intérieur de l'écrou et dans la rainure 162. L'effort appliqué sur le jonc 126 est ensuite annulé pour qu'il puisse reprendre sa formé d'origine, par retour élastique, dans la rainure 162. Le capotage d'enceinte 189 peut ensuite être monté autour de l'écrou 118 de sorte que les léchettes 164 soient alignées avec la couche abradable 166 et que l'élément d'étanchéité 138 soit aligné avec les éléments frottants 141.

Avantageusement, l'écrou 118 combine plusieurs fonctions telles que la fixation et l'étanchéité en permettant des gains en compacité et facilité de montage, en faisant face aux contraintes architectures dans la turbomachine.

## Revendications

1. Ecrou (118) de turbomachine, en particulier pour le blocage axial d'une bague (114) de palier (110), l'écrou comportant un filetage (146) de vissage sur une pièce de la turbomachine, et des moyens de blocage (152) pour l'immobilisation en rotation de l'écrou vis-à-vis de ladite pièce, l'écrou comprenant en outre au moins un moyen (164, 138, 142) d'étanchéité dynamique, **caractérisé en ce qu'**il comprend une partie à section axiale en forme sensiblement de C ou de U dont l'ouverture est orientée axialement, cette partie comportant deux parois sensiblement cylindriques, respectivement interne (130) et externe (132), ledit filetage (146) étant situé sur la paroi cylindrique interne et ledit moyen (138, 142) d'étanchéité dynamique étant situé sur la paroi cylindrique externe.

2. Ecrou (118) selon la revendication 1, comprenant deux moyens (164, 138, 142) d'étanchéité dynamique indépendants.

3. Ecrou (118) selon la revendication 1 ou 2, dans lequel le ou chaque moyen d'étanchéité comprend une série de léchettes annulaires (164), des lunules (142), une surface d'étanchéité (138), une vrille (143), et/ou un élément d'un joint d'étanchéité à labyrinthe.

4. Ecrou (118) selon l'une des revendications précédentes, comprenant une paroi radiale externe (136) formant par exemple un déflecteur.

5. Ecrou (118) selon la revendication 4, dans lequel ladite paroi radiale externe (136) est située à une extrémité aval de ladite paroi cylindrique externe (132).

6. Ecrou (118) selon l'une des revendications précédentes, dans lequel un autre moyen (164) d'étanchéité dynamique est situé sur un prolongement axial amont de ladite paroi cylindrique interne (130).

7. Ecrou (118) selon l'une des revendications précédentes, comprenant des moyens de centrage (148), indépendants dudit filetage, et configurés pour coopérer avec ladite pièce.

8. Ecrou (118) selon l'une des revendications précédentes, dans lequel lesdits moyens de blocage comprennent un rebord radial interne (152) qui comprend des encoches axiales configurées pour recevoir des pattes axiales (158) d'un anneau de verrouillage (156).

9. Ecrou (118) selon l'une des revendications précédentes, dans lequel ladite ouverture est configurée pour définir une cavité de refroidissement, en particulier par impact d'huile sur au moins une de ses parois.

10. Turbomachine, comportant une pièce, telle qu'un arbre, portant une bague (114) de palier (110) qui est bloquée axialement par un écrou (118) selon l'une des revendications précédentes.

11. Turbomachine selon la revendication précédente, dans laquelle elle comprend de préférence au moins un gicleur d'huile (180) configuré pour projeter de l'huile dans ladite ouverture de l'écrou (118).

## Patentansprüche

1. Mutter (118) einer Turbomaschine, insbesondere zur axialen Arretierung eines Rings (114) eines Lagers (110), wobei die Mutter ein Gewinde (146) zum Festschrauben auf einem Teil der Turbomaschine und Arretierungsmittel (152) für die Drehsicherung der Mutter gegenüber dem Teil beinhaltet, wobei die Mutter weiterhin mindestens ein dynamisches Dichtmittel (164, 138, 142) umfasst, **dadurch gekennzeichnet, dass** sie einen Abschnitt mit einem axialen Querschnitt umfasst, der im Wesentlichen C- oder U-förmig ist, dessen Öffnung axial ausgerichtet ist, wobei dieser Abschnitt zwei im Wesentlichen zylindrische Wände, jeweils innen (130) und außen (132) beinhaltet, wobei sich das Gewinde (146) auf der zylindrischen Innenwand befindet und sich das dynamische Dichtmittel (138, 142) auf der zylindrischen Außenwand befindet.

2. Mutter (118) nach Anspruch 1, die zwei unabhängige dynamische Dichtmittel (164, 138, 142) umfasst.

3. Mutter (118) nach Anspruch 1 oder 2, wobei das oder jedes Dichtmittel eine Reihe von ringförmigen Lippen (164), Halbmonden (142), eine Dichtfläche (138), eine Schnecke (143) und/oder ein Element einer Labyrinthdichtung umfasst.

4. Mutter (118) nach einem der vorstehenden Ansprüche, die eine radiale Außenwand (136) umfasst, die zum Beispiel einen Deflektor bildet.

5. Mutter (118) nach Anspruch 4, wobei sich die radiale Außenwand (136) an einem stromabwärtigen Ende der zylindrischen Außenwand (132) befindet.

6. Mutter (118) nach einem der vorstehenden Ansprüche, wobei sich ein weiteres dynamisches Dichtmittel (164) auf einer stromaufwärtigen axialen Verlängerung der zylindrischen Innenwand (130) befindet.

7. Mutter (118) nach einem der vorstehenden Ansprüche, die Zentriermittel (148) umfasst, die von dem Gewinde unabhängig und ausgestaltet sind, um mit dem Teil zusammenzuwirken.

8. Mutter (118) nach einem der vorstehenden Ansprüche, wobei die Arretierungsmittel einen inneren radialen Rand (152) umfassen, der axiale Einkerbungen umfasst, die ausgestaltet sind, um axiale Laschen (158) eines Verriegelungsrings (156) aufzunehmen.

9. Mutter (118) nach einem der vorstehenden Ansprüche, wobei die Öffnung ausgestaltet ist, um einen Kühlhohlraum zu definieren, insbesondere durch Öleinwirkung auf mindestens eine ihrer Wände.

10. Turbomaschine, die ein Teil, wie etwa eine Welle beinhaltet, die einen Ring (114) eines Lagers (110) trägt, der durch eine Mutter (118) nach einem der vorstehenden Ansprüche axial arretiert ist.

11. Turbomaschine nach dem vorstehenden Anspruch, wobei sie vorzugsweise mindestens eine Öldüse (180) umfasst, die ausgestaltet ist, um Öl in die Öffnung der Mutter (118) zu spritzen.

## Claims

1. Nut (118) for a turbine engine, in particular for axially locking a bearing (110) race (114), the nut comprising a thread (146) for screwing onto a part of the turbine engine, and locking means (152) for ensuring the nut cannot rotate relative to said part, the nut further comprising at least one dynamic sealing means (164, 138, 142), **characterised in that** it comprises a part having a substantially C or U-shaped axial section of which the opening is oriented axially, said part comprising two substantially cylindrical walls, which are inner (130) and outer (132) respectively, said thread (146) being located on the inner cylindrical wall, and said dynamic sealing means (138, 142) being located on the outer cylindrical wall.

2. Nut (118) according to claim 1, comprising two independent dynamic sealing means (164, 138, 142).

3. Nut (118) according to either claim 1 or claim 2, wherein the or each sealing means comprises a series of annular wipers (164), crescent-shaped holes (142), a sealing surface (138), a twist (143) and/or an element of a labyrinth sealing joint.

4. Nut (118) according to any of the preceding claims, comprising an outer radial wall (136) which forms for example a deflector.

5. Nut (118) according to claim 4, wherein said outer radial wall (136) is located at a downstream end of said outer cylindrical wall (132).

6. Nut (118) according to any of the preceding claims, wherein another dynamic sealing means (164) is located on an axial extension upstream of said inner cylindrical wall (130).

7. Nut (118) according to any of the preceding claims, comprising centring means (148), independent of said thread, and designed to engage with said part.

8. Nut (118) according to any of the preceding claims, wherein said locking means comprise an inner radial rim (152) which comprises axial recesses which are designed to receive axial lugs (158) of a locking ring (156).

9. Nut (118) according to any of the preceding claims, wherein said opening is designed to define a cooling cavity, in particular by the impact of oil on at least one of the walls thereof.

10. Turbine engine, comprising a part, such as a shaft, carrying a bearing (110) race (114) which is axially locked by a nut (118) according to any of the preceding claims.

11. Turbine engine according to the preceding claim, wherein it preferably comprises at least one oil-spraying nozzle (180) which is designed to project oil into said opening of the nut (118).
